Europäisches Patentamt

European Patent Office

Office européen des brevets

(11) Veröffentlichungsnummer: **0 017 975**
**A1**

(12) **EUROPÄISCHE PATENTANMELDUNG**

(21) Anmeldenummer: 80102041.3

(22) Anmeldetag: 16.04.80

(51) Int. Cl.³: **F 24 J 3/00, F 24 J 3/04,**
**F 24 D 11/02**

(30) Priorität: 17.04.79 AT 2862/79
23.05.79 AT 3805/79

(43) Veröffentlichungstag der Anmeldung: **29.10.80**
**Patentblatt 80/22**

(84) Benannte Vertragsstaaten: **DE FR GB IT SE**

(71) Anmelder: Laing, Oliver, Hofener Weg 35-37,
D-7148 Remseck 2 - Aldingen (DE)

(72) Erfinder: Laing, Oliver, Hofener Weg 35-37,
D-7148 Remseck 2 - Aldingen (DE)

(54) **Wärmepumpen-Heizsystem für Nachtstrombetrieb.**

(57) Solarheizsystem, welches gegebenenfalls auch zusätzlich zur Raumkühlung ausgebildet sein kann, bestehend aus mindestens folgenden Elementen:

a) einem Absorber für Solarenergie,
b) zwei Wärmespeichern,
c) einem Verdampfer-Wärmeübertrager,
d) einem Kompressor,
e) einem Verflüssiger-Wärmeübertrager,
f) einer Raumheizeinrichtung mit einer vorgegebenen Arbeitstemperatur,
g) gegebenenfalls einer Hilfsheizung,
h) einem Wärmeträger-Leitungssystem mit Ventilen, über welches die Elemente a)—e) in thermische Kommunikation treten können,

wobei die Wärmespeicher als Latentspeicher mit schmelzbarer Speichermasse ausgebildet sind, und die Schmelztemperatur des ersten Speichers unter der Arbeitstemperatur liegt und die des zweiten Speichers oberhalb derselben.

0017975

DK 6929/7a

## Wärmepumpen-Heizsystem für Nachtstrombetrieb

Die Erfindung bezieht sich auf Wärmepumpen, die mit nicht ganztägig verfügbarer Energie betrieben werden. Die Ölpreiserhöhung zwingt zur Umstellung auf ölunabhängige Heizsysteme. Der Einsatz von Wärmepumpen zur Raumwärmegewinnung hat jedoch bis heute nicht den erwarteten Erfolg gebracht, da die erzielbaren Jahresarbeitsziffern so niedrig liegen, dass der Primärenergieverbrauch beim Elektrizitätswerk grösser ist als bei der zu substituierenden Ölheizung. Der Grund ist darin zu suchen, dass die Leistungsaufnahme der Wärmepumpen wegen der Abhängigkeit der Arbeitsziffer von der Carnot´schen Beziehung

$$\varepsilon = \frac{T}{T - T_{o}}$$

überproportional mit dem Wärmebedarf ansteigt.

Die Wärmepumpe arbeitet gerade dann mit ungünstiger Arbeitsziffer, wenn der Wärmebedarf aufgrund niedriger Aussentemperaturen grosse Werte erreicht hat.

Der Wärmepreis hängt aber nicht nur vom Wärmebedarf und von der zur Erzeugung der Wärme erforderlichen Temperaturanhebung ab, sondern ausserdem vom Preis der Antriebsenergie, der bei Elektrizitätsversorgungsnetzen in der Regel während der Nachtstunden niedriger liegt als während der Tagesstunden. Es ist daher versucht worden, wegen der am Tage höher liegenden Aussenluft-Temperatur die Wärmepumpe nur während Tagesstunden einzuschalten und einen Wärmespeicher aufzuladen, aus dem Heizwärme für die Raumheizung entnommen wird. Diese Anordnung schliesst aber die Nutzung des Nachstromes aus.

Die Erfindung weist einen Weg, der es erlaubt, den thermodynamisch vorteilhaften Wärmebezug während der Tagesstunden mit den Preisvorteilen während der Nachtstromstunden zu kombinieren. Gemäss der Erfindung wird das wärmeaufnehmende Element, vorzugsweise ein wärmeabsorbierendes Dach, mit einem ersten Speicher ·kombiniert, der während der Tagesstunden mit niedriger Temperatur aufgeladen und während der Niedrigtarifstunden über den Verdampfer des Wärmepumpenkreislaufs wieder entladen wird, wobei die im Kondensator anfallende Wärme einem zweiten Speicher mit höherer Betriebstemperatur, der die Heinzeinrichtung mit Wärme beliefert, aufgeprägt wird.

Eine weitere Ausgestaltung der Erfindung besteht darin, dass die Speicher als Latentspeicher ausgebildet sind und kaskadenförmig so geschaltet werden, dass mehrere Speicher mit ansteigender Kristallisationstemperatur für die Aufnahme der Primärwärme eingesetzt werden können. Die Speicher mit den höheren Kristallisationstemperaturen dienen daneben zur Aufnahme der Verflüssigerwärme, die von der Wärmepumpe geliefert wird.

Erfindungsgemäss kann dabei das Verdichtungsverhältnis des Kompressors der Wärmepumpe so niedrig gewählt werden, dass die Temperaturzunahme gerade der Temperaturdifferenz zwischen zwei aufeinanderfolgenden Speichern entspricht, wodurch die erforderliche Antriebsleistung entsprechend niedrig liegt.

Die Erfindung sieht weiterhin vor, durch geeignete Schaltung des Wärmeträger-Leitungssystems eine direkte Ladung durch das absorbierende Dach oder aber auch durch die Rückgewinnung von Verlustwärme zu ermöglichen. Ausserdem kann auch störende Raumwärme direkt unter Zwischenschaltung eines Speichers für niedrige Temperaturen oder aber auch indirekt über die Wärmepumpe in Nutzwärme verwandelt werden.

Die Erfindung soll anhand von Figuren erläutert werden.

Figur 1 zeigt ein typisches Schaltbild einer erfindungsgemässen Anlage.

Figur 2 zeigt einen Kompressor mit Nutzwärmegewinnung durch Motorkühlung.

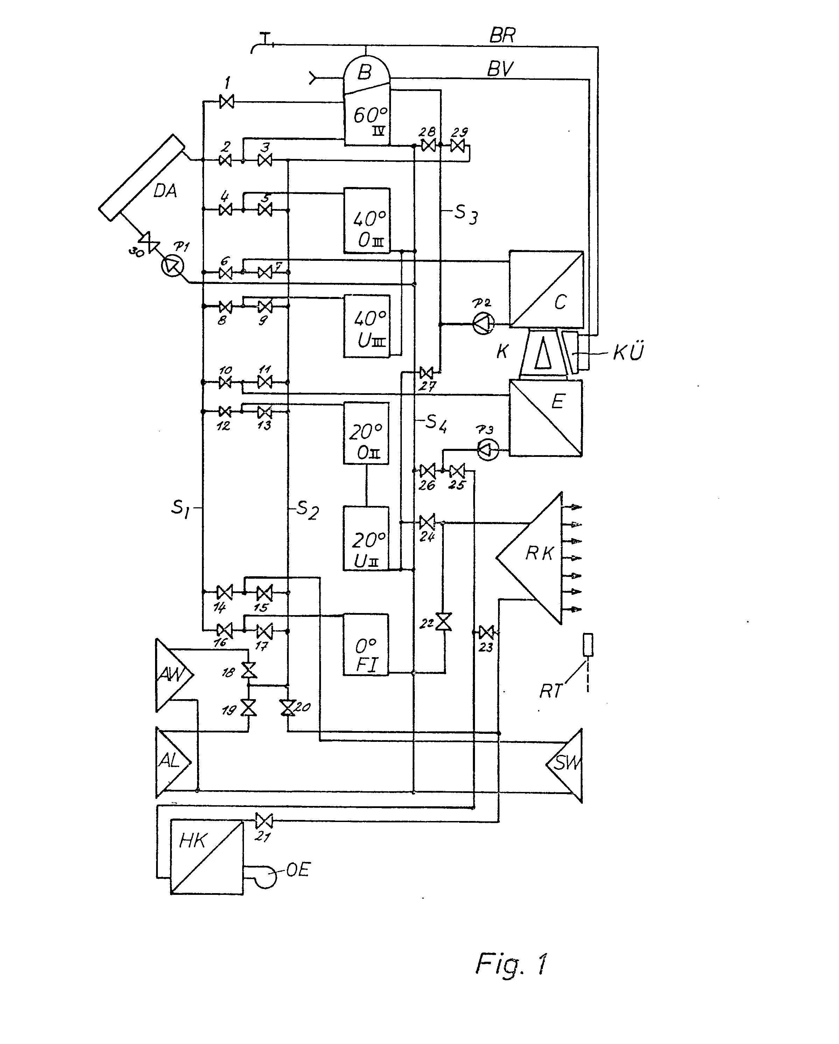

In Figur 1 ist gezeigt, dass die Primärwärme von einem von einer Wärmeträgerflüssigkeit durchströmten Dachabsorber DA geliefert wird. Der Wärmeträger wird von der Pumpe P 1 umgewälzt. Die Kristallisationstemperaturen der Latentspeicher unterscheiden sich jeweils um ca. 20°C. Die Speicher sind eintrittsseitig über die Ventile 1 - 5, 8, 9, 12, 13 und 16, 17 mit den Sammelleitungen S1 und S2 verbunden. Mit den gleichen Leitungen sind die Ventile 6 und 7 mit dem Verflüssiger über die Ventile 10 und 11 mit dem Verdampfer der Wärmepumpe CKE verbunden. Über die Ventile 14 und 15 ist ein Schwimmbad-Wärmetauscher SW angeschlossen. Über die Ventile 18 und 19 sind Wärmerückgewinnungsanlagen für Abwasser und Abluft eingebunden. Über das Ventil 20 ist der Raumluftkonvektor RK und über das Ventil 21 ein Hilfsheizkessel HK zugeschaltet. Eine weitere Sammelleitung S3 ist über das Ventil 28 mit dem Speicher IV und über das Ventil 29 mit der Leitung S2 verbunden. Sie wird von der Pumpe P2, die vom Verflüssiger C kommt, versorgt und führt über das Ventil 27 zur Speichergruppe II sowie über das Ventil 24 zum Raumluftkonvektor RK, der über das Ventil 22 mit dem Speicher I verbunden ist. Die Pumpe P3 verbindet den Verdampfer E über das Ventil 26 mit der Sammelleitung S4 und über das Ventil 25 mit dem Hilfsheizkessel HK bzw. über das Ventil 23 mit dem Raumluftkonvektor
RK. Im Hinblick auf möglichst günstige Leistungsziffern der
Wärmepumpe werden die Heizeinrichtungen mit Temperaturen betrieben, die wesentlich niedriger liegen als z.B. bei ölbefeuerten Heizungen. Lediglich für die Herstellung von Brauchwasser für die Küche reichen diese Temperaturen nicht aus.
Die Erfindung sieht deshalb vor, dass dieses Brauchwasser
durch den Wärmepumpen-Kreislauf vorgewärmt wird und dass
die dann noch fehlende Wärme aus der Verlustwärme des Elektromotors, der den Kompressor der Wärmepumpe antreibt, aufgebracht wird. Die Anwendung dieses Prinzips ist nicht auf die
erfindungsgemässe Vorrichtung beschränkt. In der erfindungsgemässen Anordnung erfolgt die zusätzliche Aufwärmung in der
Weise, dass ein mit dem Elektromotorenstator des Kompressors
K thermisch kommunizierender Hohlbehälter KÜ über eine Vorlaufleitung BV mit dem unteren Bereich des Brauchwasserbehälters B über eine Rücklaufleitung BR mit dem oberen Bereich des Brauchwasserbehälters B kommuniziert. Diese Schaltung
ist auf Anordnungen beschränkt, bei denen der Brauchwasserbehälter B geodätisch höher liegt als der Kompressor K.

Die Wärmepumpe, alle Ventile, die Umwälzpumpen sowie der Ölbrenner OE werden über einen Prozessor gesteuert, der einerseits den jeweiligen Ladezustand der Speicher I - IV, ferner
die Temperatur der Dachabsorber DA und schliesslich die Raumlufttemperatur des Fühlers RT, letzterer in Bezug auf die vorgegebene Raumlufttemperatur, als Eingabegrössen erhält. In
Abhängigkeit von diesen Eingabegrössen vollführt der Prozessor
folgende Schaltungen:

1. Dachabsorber lädt Speicher OIII
2. Dachabsorber lädt Speicher UIII
3. Dachabsorber lädt Speichergruppe II
4. Dachabsorber lädt Speicher I
5. Dachabsorber entlädt Speicher I
6. Dachabsorber heizt Konvektor RK

0017975

7. und heizt Schwimmbad SW

8. Abwasserwärme lädt Speicher I

9. Abwasserwärme lädt Speichergruppe II

10. Abluftwärme lädt Speichergruppe II

11. Wärmepumpe entlädt Speicher I

12. Wärmepumpe entlädt Speichergruppe II

13. Wärmepumpe entlädt Speichergruppe UIII

14. Wärmepumpe entlädt Wärme aus Schwimmbad SW

15. Wärmepumpe lädt Speichergruppe II

16. Wärmepumpe lädt Speicher UIII

17. Wärmepumpe lädt Speicher OIII

18. Wärmepumpe lädt Speicher IV

19. Wärmepumpe kühlt Raumkonvektor RK

20. Hilfskessel liefert Zusatzwärme

21. Raumluftkonvektor RK entlädt Speicher OIII

22. Raumluftkonvektor RK entlädt Speichergruppe II

23. Raumluftkonvektor RK entlädt Speicher IV

24. Raumluftkonvektor RK lädt Speicher I

25. Raumluftkonvektor liefert Wärme für Verdampfer E.

Durch diese Schaltmöglichkeiten und ein auf Minimierung der Antriebsleistung gerichtetes Prozessorprogramm erfolgt die Heiz- und Brauchwasser-Energiebereitstellung stets in der Weise, dass die von den Solarabsorbern aufgenommene Aussenwärme so günstig wie möglich genutzt wird. D.h. wenn diese bei hoher Temperatur anfällt, werden z.B. die Speicher III und IV mit Wärme höherer Temperatur direkt beladen. Reicht dagegen die Temperatur der Primärwärme nicht aus, so übernimmt die Wärmepumpe die Anhebung der Temperatur der in den Speichern I und II gespeicherten Wärme auf das Niveau der Speicher III. Soweit auch die Temperatur dieses Speichers beispielsweise für die Aufheizung des vorher mit der Speicherwärme der Speicherkaskade vorgewärmten Brauchwassers nicht ausreicht, wird das Temperaturniveau vom Verdampfer und damit auch vom Verflüssiger so angehoben, dass die Wärmepumpe nunmehr die Wärme, die sie vorher aus den Speichern I und II auf das Temperaturniveau des Speichers III angehoben hat, auf das Niveau des Speichers IV anhebt. Da für sämtliche Verbrauchssituationen stets die Nutzwärme bei einer Wärmequalität geliefert wird, die gerade noch für die jeweilige Aufgabenstellung ausreicht, wird der Verbrauch an Antriebsenergie auf einen Wert reduziert, der dem theoretisch erforderlichen Minimalwert nahekommt.

Zur Raumkühlung wird der Speicher I vom Wärmeträgerkreislauf des Raumkonvektors RK während der Tagesstunden aufgeladen. Während der Nacht wird er über den Kreislauf des Dachabsorbers DA durch nächtliche Abstrahlung wieder entladen. Nur wenn beispielsweise durch nächtliche Bewölkung die Abstrahlungsleistung nicht ausreicht oder die Kühlung auch während der Nachtstunden gefordert wird, entlädt die Wärmepumpe den Speicher I und gibt die Wärme an den Speicher II oder auch direkt an den Dachabsorber ab. Sofern die Dachabsorber-Temperatur oberhalb der Schwimmbadwasser-Temperatur liegt und die Speicher bereits geladen sind, wird die Dachwärme unmittelbar auf das Schwimmbad übertragen. Bei entladenen Speichern kann die Wärme des Schwimmbades durch die Wärmepumpe für den Heizprozess nutzbar gemacht werden. Nur dann, wenn die Speicher völlig entladen sind, oder aber die Wärmeträger-Temperatur für die benötigte Heizleistung nicht voll ausreicht, schaltet sich der Hilfsheizkessel HK zu, der unmittelbar oder auch unter Zwischenschaltung von Speichern seine Wärme an den Raumkonvektor RK und/oder die Wasseranlage abgibt.

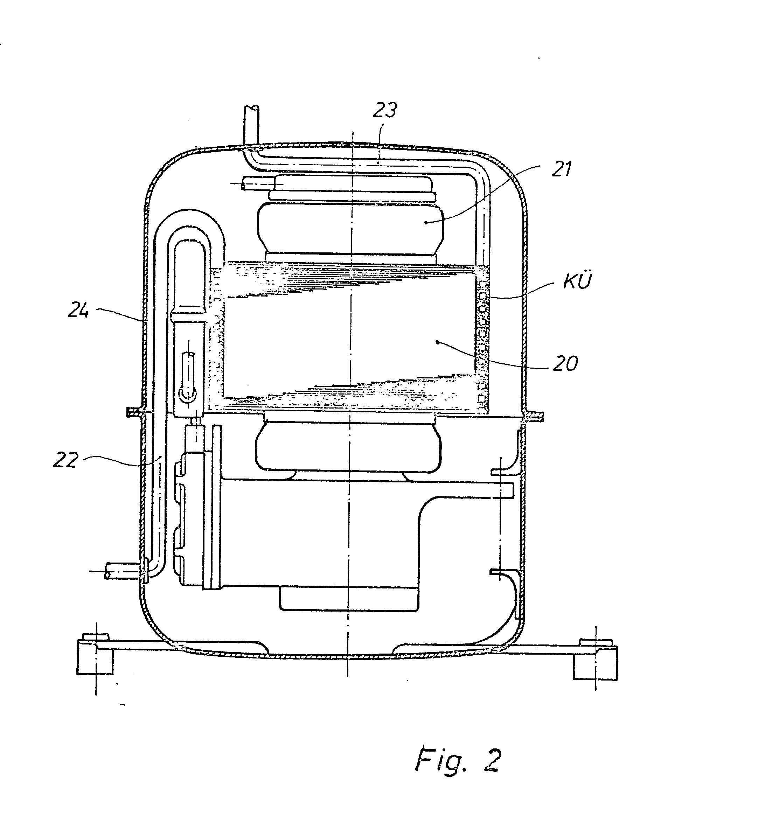

Figur 2 zeigt die praktische Ausbildung des Hohlkörpers KÜ, der als Wendel aus einem Rechteckrohr um den Stator 20 des Elektromotors 20, 21 angeordnet ist. Die Rohre 22 und 23 sind federnd angeordnet und durchdringen die Wandung des Kompressorgehäuses 24.

Die vorstehende Beschreibung ist nur beispielhaft. Es sind viele Schaltungen möglich, bei denen die am Tage gewonnene Wärme in Speicher eingespeichert wird, um durch eine Wärmepumpe wieder entladen zu werden, wobei jedoch die Wärmepumpe
im wesentlichen nur zu Zeiten der Niedertarifstunden in Betrieb genommen wird.

Ansprüche

1. Solarheizsystem, welches gegebenenfalls auch zusätzlich zur Raumkühlung ausgebildet sein kann, bestehend aus mindestens folgenden Elementen:

   a) einem Absorber für Solarenergie,
   b) zwei Wärmespeichern,
   c) einem Verdampfer-Wärmeübertrager,
   d) einem Kompressor,
   e) einem Verflüssiger-Wärmeübertrager,
   f) einer Raumheizeinrichtung mit einer vorgegebenen Arbeitstemperatur,
   g) gegebenenfalls einer Hilfsheizung,
   h) einem Wärmeträger-Leitungssystem mit Ventilen, über welches die Elemente a) - e) in thermische Kommunikation treten können,

   dadurch gekennzeichnet, dass die Wärmespeicher als Latentspeicher mit schmelzbarer Speichermasse ausgebildet sind, wobei die Schmelztemperatur des ersten Speichers unter der Arbeitstemperatur liegt und die des zweiten Speichers oberhalb derselben.

2. Solarheizsystem nach Anspruch 1, dadurch gekennzeichnet, dass das Wärmeleitungssystem eine willkürlich einstellbare thermische Kommunikation eines oder mehrerer der Elemente a) und c) mit dem ersten Speicher und der Elemente a), e) und f) mit dem zweiten Speicher ermöglicht.

3. Solarheizsystem nach Anspruch 1, dadurch gekennzeichnet, dass das Wärmeträger-Leitungssystem eine willkürlich einstellbare thermische Kommunikation zwischen den Elementen a) und c) und/oder f) ermöglicht.

4. Solarheizsystem nach Anspruch 1, dadurch gekennzeichnet, dass das Wärmeträger-Leitungssystem eine willkürlich einstellbare thermische Kommunikation zwischen dem ersten Speicher und dem Element f) ermöglicht.

5. Solarheizsystem nach Anspruch 1, dadurch gekennzeichnet, dass weitere Speicher vorgesehen sind, deren Schmelztemperaturen zwischen den Schmelztemperaturen des ersten und des zweiten Speichers liegen.

6. Solarheizsystem nach Anspruch 5, dadurch gekennzeichnet, dass zwei weitere Speicher von gleicher Schmelztemperatur vorgesehen sind.

7. Solarheizsystem insbesondere nach Anspruch 1 mit einem elektromotorisch getriebenen Kompressor, dadurch gekennzeichnet, dass der Stator (20) des Antriebsmotors (20, 21) mit einem Hohlkörper (KÜ) in thermischer Kommunikation steht und von einem Wasserstrom durchsetzt wird.

8. Solarheizsystem nach Anspruch 7, dadurch gekennzeichnet, dass der Hohlkörper (KÜ) von einem Brauchwasserstrom durchsetzt wird, der einem Behälter entnommen wird, der mit dem zweiten Speicher in thermischer Kommunikation steht.

9. Solarheizsystem nach Anspruch 7, dadurch gekennzeichnet, dass der Hohlkörper (KÜ) aus einem Rohrwendel besteht, wobei der Querschnitt des Rohres zumindest auf der zur Wendelachse gerichteten Seite als ebene Fläche ausgebildet ist.

*Fig. 1*

*Fig. 2*

**Europäisches Patentamt**

# EUROPÄISCHER RECHERCHENBERICHT

0017975

Nummer der Anmeldung

EP 80 10 2041.3

| Kategorie | Kennzeichnung des Dokuments mit Angabe, soweit erforderlich, der maßgeblichen Teile | betrifft Anspruch |
|---|---|---|
| | US - A - 4 127 161 (CLYNE et al.) <br> * Spalte 4, Zeilen 14 bis 34; Spalte 5, Zeile 64 bis Spalte 6, Zeile 4; Fig. 4, Positionen 46, 58, 68 * | 1,5, 6 |
| | -- | |
| | FR - A1 - 2 382 654 (DOROSZLAI et al.) <br> * ganzes Dokument * | 2-4 |
| | -- | |
| | DE - A1 - 2 729 134 (ULTRA CENTRIFUGE NEDERLAND N.V.) <br> * Seite 10, Absatz 2; Fig. 2, Position 29 * | 7 |
| | -- | |
| A | KLIMA-KÄLTE-HEIZUNG, Nr. 12, 1979 <br> H. SCHWIND et al. "Solarunterstütztes Wärmepumpensystem mit neuartigem Latentwärmespeicher" <br> Seiten 511 bis 520 <br> * Seite 511 bis 517 * | 1-4 |
| | -- | |
| A | DE - A1 - 2 744 618 (CIE POUR L'ETUDE ET LA REALISATION DE COMBUSTIBLES ATOMIQUES) <br> * Fig. 1 bis 9 * | 2-4 |
| | ---- | |

**EINSCHLÄGIGE DOKUMENTE**

**KLASSIFIKATION DER ANMELDUNG (Int Cl.3)**

F 24 J 3/00
F 24 J 3/04
F 24 D 11/02

**RECHERCHIERTE SACHGEBIETE (Int. Cl.3)**

F 24 D 11/00
F 24 D 17/00
F 24 J 3/00
F 25 B 29/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-07-1980 | PIEPER |

EPA form 1503.1 06.78